# NOUVEAU FASCICULE DE BREVET EUROPEEN

(11) **EP 2 048 396 B2**
(45) Date de publication et mention de la décision concernant l'opposition: **02.08.2017**
(45) Mention de la délivrance du brevet: 06.03.2013
(21) Numéro de dépôt: 08165399.0
(22) Date de dépôt: 29.09.2008
(51) Int. Cl.: F16D 13/58

(54) **Mécanisme d'embrayage, en particulier pour véhicule automobile**
Kupplungsmechanismus, insbesondere für Kraftfahrzeuge
Clutch mechanism, in particular for an automobile

(30) Priorité: 10.10.2007 FR 0758180
(43) Date de publication de la demande: 15.04.2009
(73) Titulaire: Valeo Embrayages, 80009 Amiens Cedex 2 (FR)
(72) Inventeur: Brailly, Julien, 80300, DERNANCOURT (FR); Bouchez, Olivier, 80330, CAGNY (FR)
(74) Mandataire: Cardon, Nicolas

(56) Documents cités:
- EP-A- 1 672 234
- FR-A- 2 781 024
- FR-A- 2 865 514
- FR-A1- 2 693 522
- FR-A1- 2 847 626
- FR-A1- 2 865 514
- GB-A- 2 363 391
- US-A- 4 375 253

## Description

L'invention concerne un mécanisme d'embrayage du type poussé, en particulier pour véhicule automobile, ce mécanisme comprenant un diaphragme annulaire sollicitant un plateau de pression en direction d'un plateau de réaction entraîné en rotation par un arbre menant tel que le vilebrequin d'un moteur à combustion interne de véhicule automobile, pour le serrage entre le plateau de pression et le plateau de réaction des garnitures de friction portées par un disque relié en rotation à l'arbre mené, tel par exemple qu'un arbre d'entrée d'une boîte de vitesses.

Le diaphragme annulaire comprend une partie annulaire radialement externe, telle par exemple qu'une rondelle Belleville, qui prend appui sur le couvercle de l'embrayage, et une partie annulaire radialement interne formée par des doigts radiaux élastiquement déformables s'étendant vers l'axe de rotation et destinés à coopérer par leurs extrémités libres avec des moyens d'actionnement à déplacement axial.

Ces moyens d'actionnement comprennent une butée d'embrayage qui vient s'appliquer sur les extrémités libres des doigts radiaux du diaphragme annulaire et qui est déplacée en translation axiale, soit par un mécanisme commandé par une pédale d'embrayage, soit par un actionneur hydraulique ou électrique. Dans ce dernier cas, l'embrayage peut être associé à une boîte de vitesses robotisée. La commande de cette boîte de vitesses comprend des phases d'apprentissage au cours desquelles la butée d'embrayage déplace les doigts radiaux du diaphragme annulaire sur une course nettement supérieure à la course normale de débrayage.

Ces courses importantes peuvent endommager certains composants de l'embrayage :
- des contraintes relativement très élevées sont exercées dans les zones de raccordement des doigts radiaux à la rondelle Belleville du diaphragme annulaire et sont susceptibles d'endommager le diaphragme,
- les extrémités des doigts du diaphragme peuvent interférer en fin de course avec le disque de friction, ce qui se traduit par un mauvais passage des vitesses et provoque des craquements dans la boîte de vitesses,
- lorsque l'embrayage est équipé d'un mécanisme de compensation d'usure comportant une roue à rochet associée à un cliquet qui forme un organe de détection d'usure, les courses importantes du diamètre extérieur du diaphragme engendrent des courses plus importantes de la patte de rappel du cliquet, qui peuvent provoquer sa destruction.

Il est donc souhaitable de limiter les courses de débrayage sur lesquelles sont déplacées les extrémités des doigts radiaux du diaphragme annulaire du mécanisme d'embrayage.

On a déjà proposé pour cela, dans le document FR-2 693 522-A1, de former le couvercle d'embrayage avec une partie périphérique radialement interne qui est décalée axialement en direction du disque de friction et qui forme une butée annulaire limitant la course des extrémités des doigts radiaux du diaphragme annulaire pendant le débrayage, ces doigts radiaux s'étendant à travers des ouvertures du couvercle d'embrayage. Cette solution connue oblige toutefois à utiliser des couvercles d'embrayage et des diaphragmes annulaires qui sont spécialement conçus à cet effet.

De plus, à la fin de la course normale de débrayage, les extrémités des doigts radiaux sollicités par la butée d'embrayage viennent s'appliquer sur la butée annulaire formée par la partie périphérique radialement interne du couvercle, ce qui perturbe la commande de la butée d'embrayage. Enfin, les chocs des extrémités des doigts radiaux du diaphragme sur la butée annulaire du couvercle d'embrayage sont susceptibles de produire des bruits et d'endommager le mécanisme d'embrayage et sa commande.

Un mécanisme d'embrayage d'un type connu est divulgué par FR 2 865 514 et US 4 375 253.

La présente invention a notamment pour but d'éviter ces inconvénients de technique antérieure.

Elle a pour objet un mécanisme d'embrayage qui permet de limiter les courses de débrayage sans nuire à la fiabilité du mécanisme et sans réduire sa durée de vie ou celle de sa commande.

Elle a également pour objet un mécanisme du type précité, qui et plus simple et moins coûteux que dans la technique antérieure.

Elle propose à cet effet un mécanisme d'embrayage du type poussé, selon la revendication 1.

Selon l'invention, c'est la butée de la périphérie externe du diaphragme sur le couvercle d'embrayage qui limite la course de débrayage, et non la butée des extrémités libres des doigts radiaux du diaphragme sur un élément fixe.

Ainsi, lorsque la périphérie externe du diaphragme vient en appui sur le couvercle, les extrémités libres de ces doigts radiaux peuvent poursuivre leur course en flexion, ce qui fait augmenter progressivement les efforts sur la butée d'embrayage et permet d'arrêter progressivement celle-ci, lorsque l'effort résistant que doit vaincre la butée d'embrayage devient supérieur à l'effort de déplacement qui lui est appliqué par son actionneur, et ce qui évite des chocs plus ou moins violents sur les extrémités des doigts radiaux du diaphragme, sur la butée d'embrayage et sur sa commande.

On évite aussi d'appliquer des contraintes trop élevées au diaphragme en fin de course de débrayage, ce qui prolonge sa durée de vie. On évite également toute interférence avec le disque de friction et lorsque l'embrayage comprend un mécanisme de compensation d'usure, on évite la destruction du cliquet de détection d'usure associé à une roue dentée ou roue à rochet de ce mécanisme de compensation d'usure.

Les moyens de butée selon l'invention sont formés sur le diaphragme lui-même.

Les cinq paragraphes qui suivent décrivent des exemples non couverts par les revendications mais utiles à la compréhension de l'invention.

En particulier, un bourrelet annulaire peut être formé en saillie, de façon continue ou discontinue, sur la face interne du couvercle pour former les moyens de butée de la partie périphérique externe du diaphragme annulaire et limiter la course de débrayage.

En variante, un ou de préférence plusieurs rivets peuvent être fixés sur le couvercle d'embrayage, ce ou ces rivets ayant une tête en saillie à l'intérieur du couvercle et formant la butée sur laquelle s'appuie la périphérie externe du diaphragme annulaire à la fin de la course de débrayage.

Dans une autre variante, des bossages sont formés en saillie, par exemple de moulage ou par emboutissage, sur la face interne du couvercle et forment les butées sur lesquelles s'appuie la périphérie externe du diaphragme annulaire pour limiter la course de débrayage.

Dans une autre variante, un jonc annulaire est rapporté sur la face interne du couvercle d'embrayage et forme la butée précitée sur laquelle s'appuie la périphérie externe du diaphragme à la fin de la course de débrayage.

Dans encore une autre variante de réalisation, une ou de préférence plusieurs vis sont engagées dans des orifices filetés du couvercle et s'étendent à l'intérieur de celui-ci pour former les moyens de butée précités.

Dans une autre variante, un bourrelet annulaire peut être formé en saillie à la périphérie externe du diaphragme, sur la face de celui-ci qui est tournée vers le couvercle d'embrayage pour former la butée précitée limitant la course de débrayage.

L'invention s'applique aussi bien aux mécanismes d'embrayage ne comportant pas de moyens de rattrapage automatique d'usure qu'aux mécanismes d'embrayage équipés de tels moyens.

Dans ce dernier cas, les moyens de rattrapage automatique d'usure peuvent comprendre une languette élastique fixée sur le couvercle d'embrayage et sur laquelle vient s'appuyer la périphérie externe du diaphragme pendant les courses de débrayage. Cette languette forme un appui élastique de la périphérie externe du diaphragme qui n'interfère pas avec les moyens de butée précités destinés à limiter la course de débrayage.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une demi-vue schématique en coupe axiale d'un embrayage équipé d'un mécanisme de rattrapage automatique d'usure ;
- la figure 2 est une demi-vue schématique en coupe axiale, à plus grande échelle, d'un mécanisme d'embrayage selon l'invention ;
- la figure 6 est une vue schématique partielle en coupe axiale de réalisation de l'invention ;

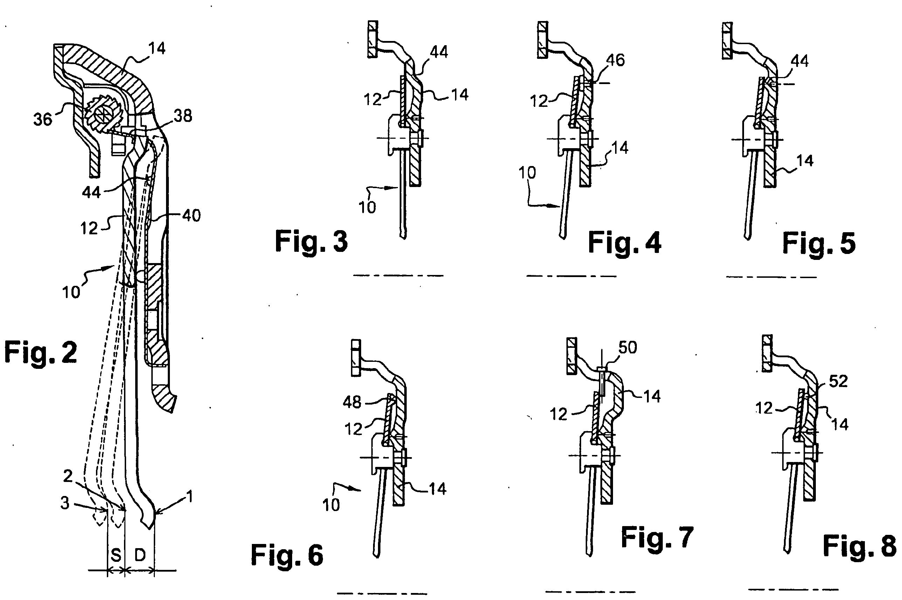

- les figures 3 à 5, 7 et 8 sont des vues schématiques partielles en coupe axiale de variantes non couvertes par les revendications mais utiles à la compréhension de l'invention ;

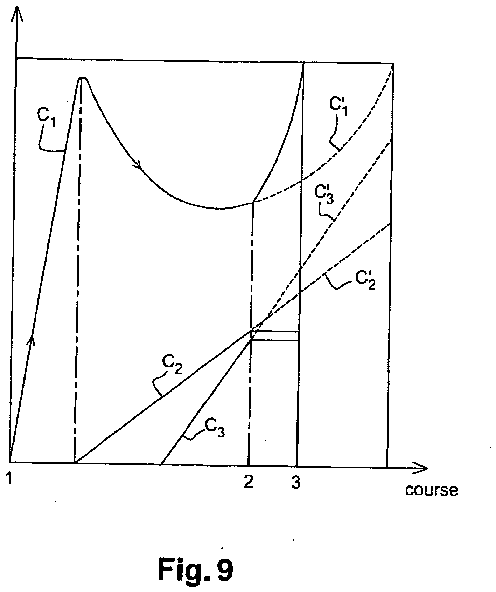

- la figure 9 est un graphe représentant les courbes théoriques de charge de la butée d'embrayage, de levée du plateau de pression et de course de cliquet en fonction de la course de débrayage dans un mécanisme d'embrayage selon l'invention.

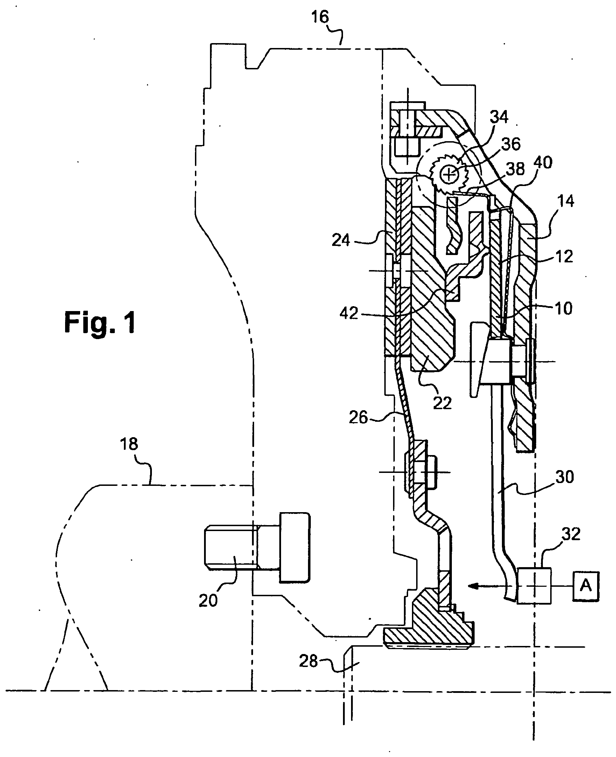

On se réfère d'abord à la figure 1, qui représente schématiquement un mécanisme d'embrayage à rattrapage automatique d'usure d'un type connu, tel que décrit dans le document FR 2 847 626-A1.

Ce mécanisme d'embrayage comprend essentiellement un diaphragme annulaire 10 dont la partie radialement externe est formée d'une rondelle Belleville 12 prenant appui sur un couvercle d'embrayage 14 fixé sur un volant d'inertie 16 entraîné en rotation par un arbre menant 18 auquel le volant 16 est fixé par des vis 20.

Le diaphragme annulaire 10 sollicite axialement un plateau de pression 22 en direction du volant d'inertie 16, qui forme le plateau de réaction de l'embrayage pour le serrage des garnitures de friction 24 portées par un disque de friction 26 solidaire en rotation d'un arbre mené 28 tel par exemple qu'un arbre d'entrée d'une boîte de vitesses.

Les extrémités libres des doigts radiaux 30 du diaphragme annulaire 10 sont en appui sur une butée d'embrayage 32 déplaçable en translation axiale par un actionneur A dans le sens indiqué par la flèche, en direction du disque de friction 26 pour le débrayage, d'une façon bien connue de l'homme du métier.

L'embrayage de la figure 1 comprend des moyens 34 de rattrapage automatique de l'usure des garnitures de friction 24 et de l'usure des surfaces du plateau de pression 22 et du plateau de réaction 16 sur lesquelles ces garnitures sont serrées, ces moyens étant logés à l'intérieur du couvercle d'embrayage 14 entre la périphérie externe du diaphragme annulaire 10 et le plateau de pression 22 et comprenant notamment une roue à rochet 36 associée à un cliquet 38 formé par l'extrémité d'une languette élastique 40 portée par le couvercle d'embrayage et s'étendant radialement entre ce couvercle et la rondelle Belleville 12 du diaphragme annulaire 10.

Pendant les courses de débrayage, l'extrémité radialement externe de la rondelle Belleville 12 vient s'appliquer sur la languette élastique 40 et la déplace en direction du couvercle 14, ce qui fait glisser le cliquet 38 sur les dents de la roue à rochet 36. Pendant la course d'embrayage suivant cette course de débrayage, le cliquet 38 fait tourner la roue à rochet 36 dans le sens des aiguilles d'une montre, ce qui produit un rattrapage automatique d'une usure éventuelle des garnitures de friction 24 et des surfaces de friction associées du plateau de pression 22 et du plateau de réaction 16, par déplacement de rampes obliques prévues sur des pièces 42 interposées entre la rondelle Belleville 12 et le plateau de pression 22.

Les surcourses de débrayage, qui peuvent se produire lors des phases d'apprentissage de la commande d'une boîte de vitesses robotisée associée à cet embrayage, peuvent être limitées selon l'invention (figure 2) grâce à des moyens de butée 44 agencés sur la rondelle Belleville 12 du diaphragme annulaire 10 pour limiter la course de débrayage à une valeur maximale D en évitant les inconvénients liés aux surcourses de débrayage S.

Dans l'exemple de la figure 2, les moyens de butée 44 sont formés en saillie sur la face interne du couvercle 14, qui se trouve en regard de la rondelle Belleville 12 du diaphragme annulaire.

En figure 2, la position embrayée du diaphragme annulaire 10 est représentée en trait plein, les extrémités libres des doigts radiaux 30 se trouvant dans la position 1 en appui sur la butée d'embrayage 32 (non représentée). Dans la position 2, qui est la position débrayée, le diaphragme annulaire 10 a basculé autour de son appui sur le couvercle d'embrayage 14 et est dans la position représentée en trait fin.

Dans cette position, la rondelle Belleville 12 du diaphragme est en appui sur la butée 44 portée par le couvercle 14. La course de débrayage D correspond à la distance entre les positions 1 et 2.

Lorsque la commande produit une surcourse de débrayage, les extrémités des doigts radiaux 30 du diaphragme 10 sont amenées dans la position 3 par flexion élastique, sans que la rondelle Belleville 12 du diaphragme ne change de position, en raison de son appui sur la butée 44. La surcourse de débrayage S est limitée par l'effort élastique exercé par les extrémités des doigts radiaux 30 sur la butée d'embrayage 32.

On se réfère maintenant à la figure 9 qui représente les courbes théoriques qui sont obtenues par simulation.

La variation de l'effort exercé sur la butée d'embrayage 32 pendant la course de débrayage est représentée en figure 9 par la courbe C1, cet effort étant sensiblement nul dans la position 1, puis augmentant jusqu'à un maximum pendant la course de débrayage et diminuant ensuite jusqu'à la fin de la course de débrayage indiquée par la position 2, cet effort augmentant ensuite en raison de la flexion élastique des doigts radiaux 30 jusqu'à la position 3 qui correspond à la fin de la surcourse de débrayage.

La partie pointillée C'1 de la courbe C1 représente l'effort qui serait appliqué à la butée d'embrayage 32 pendant la surcourse de débrayage en l'absence des moyens de butée 44 limitant le déplacement de la rondelle Belleville 12. La course de levée du plateau de pression 22 pendant la course de débrayage est représentée par la courbe C2 de la figure 9 : cette levée du plateau de pression 22 débute quand l'effort appliqué à la butée d'embrayage 32 est maximal et s'arrête, dans le mécanisme d'embrayage selon l'invention, dans la position 2 qui correspond à la fin de la course de débrayage, la levée du plateau de pression 22 n'augmentant pas pendant la surcourse de débrayage entre les positions 2 et 3. La partie C'2 de cette courbe indique la levée supplémentaire du plateau de pression 22 qui se produirait pendant la surcourse de débrayage en l'absence des moyens de butée 44 selon l'invention.

La courbe C3 de la figure 9 représente la course du cliquet 38 des moyens de rattrapage automatique d'usure, cette course commençant lorsque la rondelle Belleville 12 du diaphragme annulaire 10 s'applique sur la languette élastique 40 et se terminant dans la position 2 à la fin de la course de débrayage D. En l'absence des moyens de butée 44 selon l'invention, la course du cliquet se poursuivrait jusqu'à la fin de la surcourse de débrayage comme indiqué dans la partie pointillée C'3 de la courbe C3.

Les moyens de butée peuvent être formés par un ou plusieurs bossages 44 du couvercle 14 comme représenté schématiquement en figure 3, ce ou ces bossages étant en saillie à l'intérieur du couvercle 14 et limitant le déplacement de la rondelle Belleville 12 pendant la course de débrayage.

Dans la variante de la figure 4, ces moyens de butée 44 sont formés par la tête d'un rivet 46 monté dans un orifice du couvercle 14 de façon à ce que la tête de ce rivet se trouve en saillie à l'intérieur du couvercle 14 et forme la butée limitant la course de débrayage.

Bien entendu, on peut équiper le couvercle 14 de plusieurs rivets 46 répartis de façon uniforme autour de l'axe de rotation.

Dans la variante de la figure 5, les moyens de butée 44 sont constitués par un bourrelet annulaire du couvercle 14, formé de moulage ou par emboutissage par exemple, ce bourrelet venant en saillie sur la face interne du couvercle 14 pour limiter la course de débrayage.

Dans la variante de la figure 6 selon l'invention, les moyens de butée sont formés par un bourrelet annulaire 48 de la périphérie radialement externe de la rondelle Belleville 12, ce bourrelet 48 étant en saillie sur la face de la rondelle Belleville 12 qui est en regard du couvercle d'embrayage 14.

Dans la variante de la figure 7, les moyens de butée limitant la course de débrayage sont formés par une ou plusieurs vis 50 qui sont vissées dans des orifices filetés du couvercle d'embrayage 14 de telle sorte que les extrémités de ces vis s'étendent en saillie à l'intérieur du couvercle 14 et viennent intercepter la périphérie de la rondelle Belleville 12 à la fin de la course de débrayage.

Dans la variante de la figure 8, les moyens de butée sont formés par un jonc annulaire 52 monté sur la face interne du couvercle d'embrayage 14 pour former une surface d'appui de la périphérie de la rondelle Belleville 12 à la fin de la course de débrayage.

D'autres moyens de butée que ceux décrits et représentés peuvent être utilisés sans sortir du cadre de l'invention, pour autant que ces moyens limitent de façon positive la course de débrayage à une valeur prédéterminée au-delà de laquelle une surcourse de débrayage est absorbée progressivement par une flexion élastique des doigts radiaux 30 du diaphragme annulaire sans que le diaphragme ne pivote davantage autour de son appui sur le couvercle d'embrayage.

## Revendications

1. Mécanisme d'embrayage du type poussé, en particulier pour véhicule automobile, comprenant un diaphragme annulaire (10) dont la partie annulaire radialement externe (12) prend appui sur un couvercle (14) de l'embrayage pour solliciter axialement un plateau de pression (22) vers un plateau de réaction (16) et dont la partie radialement interne comprend des doigts radiaux (30) élastiquement déformables destinés à coopérer par leurs extrémités libres avec des moyens d'actionnement (32) à déplacement axial, ce mécanisme comprenant des moyens (44) de butée de la partie périphérique externe (12) du diaphragme annulaire sur le couvercle d'embrayage (14) en fin de course de débrayage, **caractérisé en ce que** lesdits moyens de butée forment des éléments en saillie à partir d'une face du diaphragme tournée vers le couvercle.

2. Mécanisme selon la revendication 1, **caractérisé en ce que** les moyens de butée sont formés par un bourrelet annulaire (48) de la périphérie externe (12) du diaphragme annulaire, ce bourrelet étant en saillie sur la face du diaphragme tournée vers le couvercle (14).

3. Mécanisme selon l'une des revendications précédentes, **caractérisé en ce qu'**il comprend des moyens (36), (42) de rattrapage d'usure, actionnés par une languette élastique (40) fixée sur le couvercle (14) et sur laquelle s'appuie la périphérie externe (12) du diaphragme pendant la course de débrayage.

## Patentansprüche

1. Kupplungsmechanismus der gedrückten Art, insbesondere für ein Kraftfahrzeug, umfassend eine ringförmige Membranfeder (10), deren radial äußerer ringförmiger Teil (12) auf einem Deckel (14) der Kupplung aufliegt, um axial eine Druckplatte (22) gegen eine Reaktionsplatte (16) zu beaufschlagen, und deren radial innerer Teil elastisch verformbare radiale Finger (30) aufweist, die dazu bestimmt sind, mit ihren freien Enden mit axial verschiebbaren Betätigungsmitteln (32) zusammen zu wirken, wobei dieser Mechanismus Mittel (44) zum Anschlagen des äußeren Umfangsteils (12) der ringförmigen Membranfeder auf dem Kupplungsdeckel (14) am Ende des Auskuppelweges umfasst, **dadurch gekennzeichnet, dass** die besagten Anschlagmittel vorspringende Elemente bilden, die sich ausgehend von einer zum Deckel gewandten Fläche der Membranfeder erstrecken.

2. Mechanismus nach Anspruch 1, **dadurch gekennzeichnet, dass** die Anschlagmittel durch einen ringförmigen Wulst (48) des äußeren Umfangs (12) der ringförmigen Membranfeder gebildet sind, wobei dieser Wulst auf der zum Deckel (14) gewandten Fläche der Membranfeder vorspringt.

3. Mechanismus nach einem der vorherigen Ansprüche, **dadurch gekennzeichnet, dass** er Mittel (36), (42) zum Ausgleich von Verschleiß aufweist, die durch eine elastische Zunge (40) angetrieben sind, welche am Deckel (14) befestigt ist und auf der sich der äußere Umfang (12) der Membranfeder während des Auskuppelweges abstützt.

## Claims

1. Clutch mechanism of the push type, in particular for an automobile, with an annular diaphragm (10) of which the radially external annular part (12) is supported on a cover (14) of the clutch for urging a pressure plate (22) axially towards a reaction plate (16) and of which the radially internal part has elastically deformable radial fingers (30), whose free ends are intended to cooperate with means of actuation (32) for axial displacement, this mechanism comprising stop means (44) stopping the external peripheral part (12) of the annular diaphragm on the clutch cover (14) at the end of declutching, **characterized in that** said stop means form projecting elements extending from a face of the diaphragm turned towards the cover.

2. Mechanism according to claim 1, **characterized in that** the stop means are formed by an annular edge (48) of the external periphery (12) of the annular diaphragm, this edge projecting over the face of the diaphragm turned towards the cover (14).

3. Mechanism according to either one of the above claims, **characterized in that** it comprises means (36), (42) for correcting wear, actuated by an elastic strip (40) mounted on the cover (14) and on which the external periphery (12) of the diaphragm is supported during declutching.
